# EUROPEAN PATENT SPECIFICATION

(11) **EP 3 549 872 B1**
(45) Date of publication and mention of the grant of the patent: **24.02.2021**
(21) Application number: 19169577.4
(22) Date of filing: 15.09.2011
(51) Int. Cl.: B64D 47/08, F16M 11/12

(54) **DUAL-AXIS PLATFORM FOR USE IN A SMALL UNMANNED AERIAL VEHICLE AND TRI-AXIS PLATFORM FOR USE IN A SMALL UNMANNED AERIAL VEHICLE**
ZWEIACHSIGE PLATTFORM ZUR VERWENDUNG IN EINEM KLEINEN UNBEMANNTEN LUFTFAHRZEUG UND DREIACHSIGE PLATTFORM ZUR VERWENDUNG IN EINEM KLEINEN UNBEMANNTEN LUFTFAHRZEUG
PLATE-FORME À DEUX AXES À UTILISER DANS UN PETIT VÉHICULE AÉRIEN SANS PILOTE ET PLATE-FORME À TROIS AXES À UTILISER DANS UN PETIT VÉHICULE AÉRIEN SANS PILOTE

(30) Priority: 09.09.2011 CN 201110268339
(43) Date of publication of application: 09.10.2019
(62) Divisional of application: 11872105.9
(73) Proprietor: SZ DJI Osmo Technology Co., Ltd., Shenzhen, Guangdong 518057 (CN)
(72) Inventor: Wang, Tao, Shenzhen, Guangdong 518057 (CN)
(74) Representative: Goddar, Heinz J.

(56) References cited:
- WO-A2-2004/067432
- CN-U- 201 604 796
- DE-A1- 10 208 413
- DE-A1-102008 039 468
- GB-A- 2 375 173
- US-A- 5 900 925
- US-A1- 2009 179 129

## Description

### Field of the Invention

The present invention relates to the field of unmanned aerial vehicles, and particularly to a multi-rotor aerial vehicle with a dual-axis platform and a tri-axis platform for purpose of aerial photography or surveillance.

### Background of the Invention

An unmanned aerial vehicle is characterized by its small size, light weight, low costs, flexible operation and high safety, and may be extensively applied to fields such as aerial photography, surveillance, search and rescue, and resource exploration. Since the unmanned aerial vehicle itself suffers from high frequency vibration and low frequency jitter, it needs to be equipped with an aerial photography stabilizing platform to carry a video camera or camera to achieve stable shooting. Aerial photography stabilizing platforms mostly detect posture changes of the video camera or camera via an electronic apparatus and control reverse compensation of a steering engine to achieve stabilization of the video camera or camera. In the prior art, most of platforms employ mechanical gear driving to achieve dual-axis, tri-axis or multi-axis rotation of the video camera or camera. Since there is always a lag in gear transmission, when the unmanned aerial vehicle is in various postures such as turning, hovering, rising, falling or tilting, the response time of the platform is long and the adjustment of the steering engine is slow, so that it is very difficult for the video camera or camera to adjust its angle timely to adapt for adjustment of postures of the unmanned aerial vehicle, therefore causing the image quality of the video camera or camera to be affected. Meanwhile, a gear transmission platform does not have high flexibility, cannot perform indefinitely variable adjustment so that the adjustment precision is not high, and cannot eliminate the influence due to low frequency shake or airframe tilt, therefore makes it very difficult to shoot high quality images and meet professional needs.

WO 2004/067432 describes methods and apparatuses for stabilizing payloads, including airborne cameras.

US 5 900 925 A describes a computer operated man assisted motion generation system for use with a camera in cinematography.

CN 201 604 796 U describes an unmanned aerial vehicle.

GB 2 375 173 A describes a long-term navigation method and device.

### Summary of the Invention

The present invention relates to a multi-rotor aerial vehicle as defined by independent claim 1. Preferred embodiments are described in the dependent claims.

The multi-rotor aerial vehicle comprises:
a tri-axis platform, comprising:
   a dual-axis platform, comprising a machine frame assembly and a transmission assembly, the machine frame assembly comprises a first bracket, a second bracket and a third bracket, wherein the first bracket is configured to fix a shooting assembly, the first bracket is rotatably arranged with the second bracket, and the second bracket is rotatably arranged with the third bracket,
   the transmission assembly comprises a first motor and a second motor,
   wherein the first motor is configured to directly drive the first bracket to rotate relative to the second bracket, and the second motor is configured to directly drive the second bracket to rotate relative to the third bracket,
   wherein the transmission assembly further comprises a third motor, the machine frame assembly further comprises a connecting frame for fixing externally, and the third motor is configured to directly drive the third
   bracket to rotate relative to the connecting frame;
and
a multi-rotor mounting frame, the multi-rotor mounting frame comprising:
   a support frame;
   a base on which the connecting frame is fixed;
   a plurality of support arms fixedly arranged on the base; and
   rotor members disposed on the support arms.

The present invention may provide platforms for use in a small unmanned aerial vehicle to solve a technical problem that a platform for use in a small unmanned aerial vehicle in the prior art has a long response time due to use of gear transmission, cannot timely adapt for various flying postures of the unmanned aerial vehicle, and cannot perform indefinitely variable adjustment so that the adjustment precision is not high.

The present invention may achieve the following advantages: transformation of the shooting assembly at a rise angle or bow angle in a vertical plane is achieved through the rotation of the first bracket relative to the second bracket, rotation of the shooting assembly itself is achieved through leftward tilt rotation or right tilt rotation of the second bracket relative to the third bracket, circumferential shooting of the shooting assembly is achieved through circumferential rotation of the third bracket; the motors, as a motive power, are employed to directly connect to the machine frame assembly of the platform, thereby consuming less energy and saving electrical power; meanwhile, motor driving is capable of achieving indefinitely variable adjustment, so that the motors have a short response time and are capable of starting and stopping quickly, or adjusting the magnitude of the rotation speed in a timely manner to adapt for various flying postures of the unmanned aerial vehicle and thereby improving the shooting stability of the shooting assembly.

### Brief Description of Drawings

The present invention will be further described with reference to examples, embodiments and figures, in which:
Fig.1 is an exploded structure diagram of a dual-axis platform for use in a small unmanned aerial vehicle as provided by Example 1;
Fig.2 is an exploded structure diagram of a tri-axis platform for use in a small unmanned aerial vehicle as provided by Example 2;
Fig.3 is assembly structure diagram 1 of the tri-axis platform for use in a small unmanned aerial vehicle as provided by Example 2 n;
Fig.4 is assembly structure diagram 2 of the tri-axis platform for use in a small unmanned aerial vehicle as provided by Example 2;
Fig.5 is an exploded structure diagram of the tri-axis platform for use in a small unmanned aerial vehicle as provided by Example 2 being mounted to a multi-rotor mounting frame according to an embodiment of the present invention;
Fig.6 is assembly structure diagram 1 of the tri-axis platform for use in a small unmanned aerial vehicle as provided by Example 2 being mounted to a multi-rotor mounting frame according to an embodiment of the present invention;
Fig.7 is assembly structure diagram 2 of the tri-axis platform for use in a small unmanned aerial vehicle as provided by Example 2 being mounted to a multi-rotor mounting frame according to an embodiment of the present invention.

Description of Reference Numerals:

| | |
|---|---|
| 100 platform | 200 multi-rotor mounting frame |
| 1 shooting assembly | 2 first bracket |
| 3 first motor | 4 second bracket |
| 5 second motor | 6 third bracket |
| 7 third motor | 8 connecting frame |
| 9 positioning block | 10 sleeve |
| 11 connecting block | 21 base |
| 22 support arm | 23 rotor member |
| 24 support frame | |

### Detailed Description of Examples and Preferred Embodiments

Specific examples and embodiments of the present invention will be described in detail with reference to figures for a clearer understanding of the technical features, objects and effects of the present invention.

### Example 1

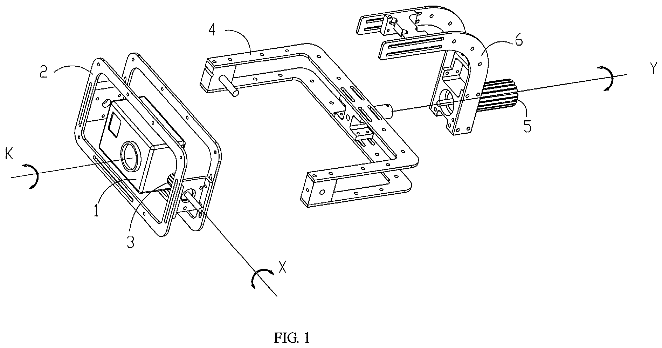

As shown in Fig.1, an illustrative example 1 not being an embodiment of the claimed invention provides a dual-axis platform for use in an unmanned aerial vehicle, comprising specifically a machine frame assembly, a transmission assembly and a shooting assembly 1. The machine frame assembly comprises a first bracket 2 and a second bracket 4, the shooting assembly 1 is fixed on the first bracket 2. Here, the shape of the shooting assembly 1 is not limited to square as shown in Fig.1, and may also be circular or in other shapes as commonly seen in the market. In order to achieve rotation of the shooting assembly 1 along X axis (namely, the rotation axis of the first bracket 2), the first bracket 2 is rotatably arranged on the second bracket 4 through a pin shaft at an end. Such rotational structure can achieve rise or bow rotation of the shooting assembly 1. In order to adapt for left tilt or right tilt flight of the unmanned aerial vehicle during flying, the shooting assembly 1 performs right tilt or left tilt rotation correspondingly to ensure stability of photo taking or video shooting. As shown in Fig.1, the second bracket 4 is rotatable about its own rotation axis Y, and the second bracket 4 rotates to the left or the right a certain angle to thereby bring the first bracket 2 and the shooting assembly 1 as a whole into rotation. In order to drive the first bracket 2 and the second bracket 4, the present example provides motors as power source. Use of a small-sized motor for direct driving has the following advantages: (1) the motor drives directly with less power consumption, thereby saves energy and protects the environment; (2) the motor has a short response time and is capable of making quick and timely adjustment to adapt for various flying postures of the unmanned aerial vehicle so as to improve shooting stability of the shooting assembly; (3) the motor can achieve indefinitely variable adjustment and uniform speed change, is capable of adjusting the magnitude of the speed continuously and arbitrarily in a permissible speed range, exerts less impact on parts of mechanisms, and has good stability. Specifically, as shown in Fig.1, the transmission assembly comprises a first motor 3 and a second motor 5, wherein the first motor 3 directly drives the first bracket 2 to rotate about its rotation axis (namely, X axis) relative to the second bracket 4, and the second motor 5 directly drives the second bracket 4 to rotate about its rotation axis (namely, Y axis). The present example employs the motors, as a motive power, to directly connect to the machine frame assembly of the platform, thereby consuming less energy and saving electrical power; meanwhile, motor driving can achieve indefinitely variable adjustment, so that the motors have a short action response time and are capable of starting and stopping quickly, or adjusting the magnitude of the rotation speed in a timely manner to adapt for various flying postures of the unmanned aerial vehicles and thereby improving shooting stability of the shooting assembly.

In order to facilitate the motors to make timely adjustment to the rotation angles, preferably the rotation axis X of the first bracket 2 is arranged perpendicular to the rotation axis Y of the second bracket 4.

Specifically, as shown in Fig.1, a stator of the first motor 3 is fixed on the first bracket 2, and a rotor of the first motor 3 is fixedly arranged with the second bracket 4. The first motor 3 directly drives the second bracket 4 to bring the first bracket 2 into rotation relative to the second bracket 4. It should be noted here that the stator and rotor of the third motor 3 are interchangeable in position, namely, the rotor of the first motor 3 is fixed on the first bracket 2 and the stator is fixedly arranged with the second bracket 4, which can also achieve the function of relative rotation.

Preferably, as shown in Fig.1, a stator of the second motor 5 is fixed on a third bracket 6, and a rotor of the second motor 5 is fixedly arranged with the second bracket 4. The second motor 5 directly drives the second bracket 4 to bring the second bracket 4 into rotation relative to the third bracket 6. It should be noted here that the stator and rotor of the second motor 5 are interchangeable in position, namely, the rotor of the second motor 5 is fixed on the third bracket 6 and the stator is fixedly arranged with the second bracket 4, which can also achieve the function of relative rotation.

During the flight of the unmanned aerial vehicle, when a central axis of a lens of the shooting assembly 1 rotates to a position perpendicular to a plane constituted by the X axis and Y axis, leftward or rightward rotation of the second bracket 4 about the Y axis can only drive the lens of the shooting assembly 1 to sweep within a certain range of the perpendicular plane and cannot achieve self-rotation of the lens of the shooting assembly 1. In order to allow for omni-directional adjustment of the angle of the lens when the lens rotates to be perpendicular to the plane constituted by the X axis and Y axis, on the basis of the above technical solution, as a preferred example, the transmission assembly comprises a fourth motor which drives the shooting assembly 1 to rotate about its own rotation axis K. When the K axis is parallel to or coaxial with the Y axis, the rotation of the second bracket 4 about the Y axis can achieve self-rotation of the lens of the shooting assembly 1; when the K axis is perpendicular to the Y axis, the lens of the shooting assembly 1 achieves self-rotation via the fourth motor.

Furthermore, to increase stability during the shooting of the shooting assembly 1, the center of gravity of the first bracket 2 and the shooting assembly 1 falls on the rotation axis of the first bracket 2. It is found through mechanical analysis that, when the center of gravity of the first bracket 2 and the shooting assembly 1 falls on the rotation axis X of the first bracket 2, the first bracket 2 does not generate a rotational torque at any angle it is rotated to, i.e., the first bracket 2 will not shake to and fro due to the torque and therefore stability of the shooting assembly 1 during rotation is increased. When the unmanned aerial vehicle operates stably, namely, when motor driving is not needed, the first bracket 2 and the shooting assembly 1 are also in a dynamically balanced state.

Likewise, it is found through mechanical analysis that, in order to increase stability and prevent the whole assembly rotating about the Y axis from generating the rotational torque, preferably the center of gravity of the first bracket 2, the second bracket 4 and the shooting assembly 1 as a whole falls on the rotation axis of the second bracket 4, as shown in Fig.1.

On the basis of the above technical solution, preferably, the platform provided by the present example is adapted for a small unmanned aerial vehicle for aerial photography and surveillance, and the first motor 3, the second motor 5 and the fourth motor are preferably DC brushless motors. Advantages of using DC brushless motors in the platform for use in an unmanned aerial vehicle lie in that: (1) electronic commutation, in place of conventional mechanical commutation, achieves reliable performance, permanent wear resistance, low malfunction rate and an increased service life about six times longer than a brush motor; (2) the DC brushless motor is a static motor with a small no-load current; (3) high efficiency; (4) small size.

Furthermore, the transmission assembly further comprises an inertia sensor, a microprocessor and a signal line, wherein the inertia sensor comprises a gyroscope for detecting an angular speed signal and an accelerometer for detecting an acceleration signal, the microprocessor controls start, stop and the magnitude of rotation speed of the first motor 3 and the second motor 5 according to the angular speed signal and the acceleration signal. The postures of the unmanned aerial vehicle are monitored timely and dynamically by providing the inertia sensor, and the start and stop of the motors are quickly and timely controlled so as to improve the shooting stability of the shooting assembly.

On the basis of the above technical solution, the dual-axis platform for use in an unmanned aerial vehicle may be subjected to structural improvement to achieve rotation in any other two directions. The improved platform for use in a small unmanned aerial vehicle is a dual-axis platform which specifically comprises a machine frame assembly, a transmission assembly and a shooting assembly 1. The machine frame assembly comprises a first bracket 2, a third bracket 6, and a connecting frame 8. The shooting assembly 1 is fixed on the first bracket 2, and the first bracket 2 is rotatably arranged with the third bracket 6. Such rotational structure can achieve rise or bow rotation of the shooting assembly 1. The connecting frame 8 is fixed externally to a helicopter or a multi-rotor aerial vehicle, and the third bracket 6 is circumferentially rotatable relative to the connecting frame 8, thereby bringing the platform as a whole into circumferential rotation. In order to drive the first bracket 2 and the third bracket 6, a power source provided by the present example is a motor. Use of a small-sized motor for direct driving has the following advantages: (1) the motor drives directly with less power consumption, thereby saves energy and protects the environment; (2) the motor has a short response time and is capable of making quick and timely adjustment to adapt for various flying postures of the unmanned aerial vehicle so as to improve shooting stability of the shooting assembly; (3) the motor can achieve indefinitely variable adjustment and uniform speed change, is capable of adjusting the magnitude of the speed continuously and arbitrarily in a permissible speed range, exerts less impact on parts of mechanisms, and has good stability. Specifically, the transmission assembly comprises a first motor 3 and a third motor 7, wherein the first motor 3 directly drives the first bracket 2 to rotate about its rotation axis (namely, X axis) and thereby bringing the lens of the shooting assembly 1 into rise and bow rotation; the third motor 7 directly drives the third bracket 6 to circumferentially rotate about its rotation axis (namely, Z axis), thereby driving the shooting assembly 1 to perform circumferential shooting about the Z axis.

Likewise, the dual-axis platform for use in an unmanned aerial vehicle may also be subjected to structural improvement in order to simultaneously achieve leftward or rightward tilt and circumferential rotation of the shooting assembly 1. The improved platform specifically comprises a machine frame assembly, a transmission assembly and a shooting assembly 1. The machine frame assembly comprises a second bracket 4 and a third bracket 6. The shooting assembly 1 is fixed on the second bracket 4, and the second bracket 4 is rotatable about the rotation axis Y a certain angle. Rotation of the second bracket 4 drives the shooting assembly 1 to tilt to the left or right. The third bracket 6 is circumferentially rotatable about its rotation axis (namely, Z axis) to thereby drive the shooting assembly 1 to sweep and shoot circumferentially. The transmission assembly comprises a second motor 5 and a third assembly 7, wherein the second motor 5 directly drives the second bracket 4 to rotate a certain angle about its rotation axis (namely, Y axis) relative to the third bracket 6, and the third motor 7 directly drives the third bracket 6 to circumferentially rotate about its rotation axis (namely, Z axis). Preferably, the rotation axis Y of the second bracket 4 is arranged perpendicular to the rotation axis Z of the third bracket 6. The machine frame assembly further comprises a connecting frame 8, and the third bracket 6 is rotatably arranged on the connecting frame 8. Specifically, a stator of the third motor 7 is fixed on the connecting frame 8, and a rotor thereof is fixedly connected to the third bracket 6.

In the above example, the stator and rotor of each of the first motor 3, the second motor 5 and the third motor 7 are interchangeable in position, which may also achieve the purpose of rotation.

### Example 2

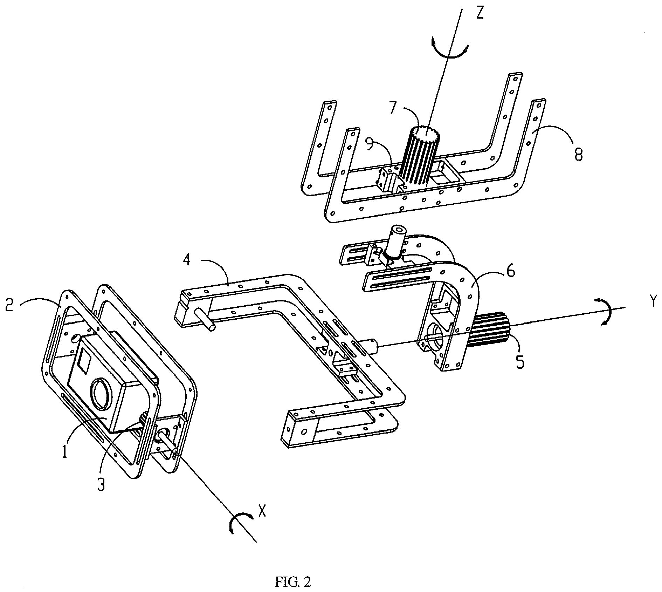

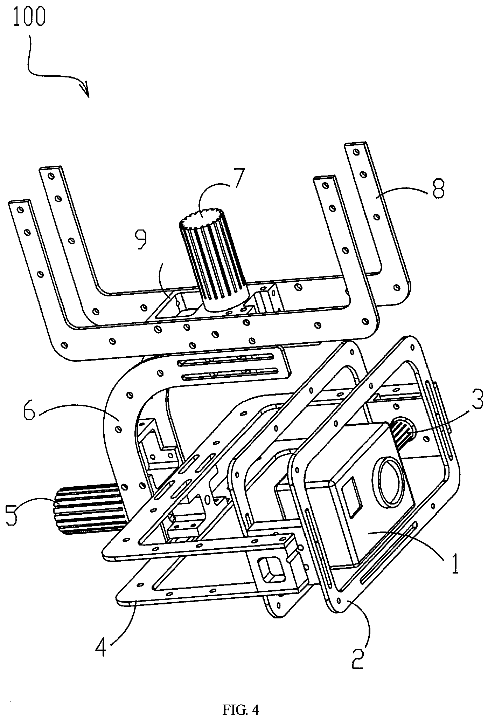

In an example as shown in Figs.2, 3 and 4, the present invention provides a platform 100 for use in an unmanned aerial vehicle. Such platform 100 is a platform capable of tri-axial rotation, and specifically comprises a machine frame assembly, a transmission assembly and a shooting assembly 1. As shown in Fig.2, the machine frame assembly comprises a first bracket 2, a second bracket 4, a third bracket 6 and a connecting frame 8. The shooting assembly 1 is fixed on the first bracket 2. To achieve rotation of the shooting assembly 1 along X axis (namely, the rotation axis of the first bracket 2), the first bracket 2 is rotatably arranged with the second bracket 4. Such rotational structure can achieve rise or bow rotation of the shooting assembly 1. In order to adapt for left tilt or right tile flying of the unmanned aerial vehicle during flight, the shooting assembly 1 rotates to the right or to the left correspondingly to ensure stability of photo taking or video shooting. As shown in Fig.2, the second bracket 4 is rotatably arranged with the third bracket 6, and the second bracket 4 rotates to the left or the right to thereby bring the first bracket 2 and the shooting assembly 1 as a whole into rotation. To allow for circumferential rotation of the shooting assembly 1 to perform rotatable shooting in a range of 360 degrees, the connecting frame 8 is fixed externally to a helicopter or a multi-rotor aerial vehicle, and the third bracket 6 may rotate about a Z axis relative to the connecting frame 8. In order to drive the first bracket 2, the second bracket 4 and the third bracket 6, a power source provided by the present example is a motor. Use of a small-sized motor for direct driving has the following advantages: (1) the motor drives directly with less power consumption, thereby saves energy and protects the environment; (2) the motor has a short response time and is capable of making quick and timely adjustment to adapt for various flying postures of the unmanned aerial vehicle so as to improve shooting stability of the shooting assembly; (3) the motor can achieve indefinitely variable adjustment and uniform speed change, is capable of adjusting the magnitude of the speed continuously and arbitrarily in a permissible speed range, exerts less impact on parts of mechanisms, and has good stability. Specifically, as shown in Figs.2, 3 and 4, the transmission assembly comprises a first motor 3, a second motor 5 and a third motor 7, wherein the first motor 3 directly drives the first bracket 2 to rotate about its rotation axis X relative to the second bracket 4, the second motor 5 directly drives the second bracket 4 to rotate about its rotation axis Y relative to the third bracket 6, and third motor 7 directly drives the third bracket 6 to circumferentially rotate about the Z axis. The present example employs the motors, as a motive power, to directly connect to the machine frame assembly of the platform, thereby consuming less energy and saving electrical power; meanwhile, motor driving can achieve indefinitely variable adjustment, so that the motors have a short action response time and are capable of starting and stopping quickly, or adjusting the magnitude of the rotation speed in a timely manner to adapt for various flying postures of the unmanned aerial vehicles and thereby improving shooting stability of the shooting assembly.

Preferably, the rotation axis X of the first bracket 2, the rotation axis Y of the second bracket 4 and the rotation axis Z of the third bracket 6 are arranged perpendicular to one another.

Specifically, as shown in Fig.2, a stator of the third motor 7 is fixed on a landing gear 8, and a rotor thereof is fixed on the third bracket 6. More specifically, two U-shaped connecting frames 8 are fixedly connected by a positioning block 9, and the stator of the third motor 7 is fixed on the positioning block 9 via a bolt or a screw. A connecting block 11 is fixedly provided on the third bracket 6, and a sleeve 10 with a built-in through-hole is fixed on the connecting block 11. The through-hole on the sleeve 10 matches with the rotor of the third motor 7, and the rotor is inserted into the through-hole and is interference fitted with the through-hole. It may be understood that the stator and rotor are interchangeable in position, which may also achieve the purpose of rotation.

On the basis of the above technical solution, to increase stability of the shooting assembly 1 during shooting, the center of gravity of the first bracket 2 and the shooting assembly 1 falls on the rotation axis X of the first bracket 2. It is found through mechanical analysis that, when the center of gravity of the first bracket 2 and the shooting assembly 1 falls on the rotation axis X of the first bracket 2, the first bracket 2 does not generate a rotational torque at any angle it is rotated to, i.e., the first bracket 2 will not shake to and fro due to the torque and thereby stability of the shooting assembly 1 during rotation is increased. When the unmanned aerial vehicle operates stably, i.e., when motor driving is not needed, the first bracket 2 and the shooting assembly 1 are also in a dynamically balanced state.

Likewise, in order to increase stability and prevent the whole assembly rotating about the Y axis from generating the rotational torque, preferably the center of gravity of the first bracket 2, the second bracket 4 and the shooting assembly 1 as a whole falls on the rotation axis of the second bracket 4, as shown in Fig.1.

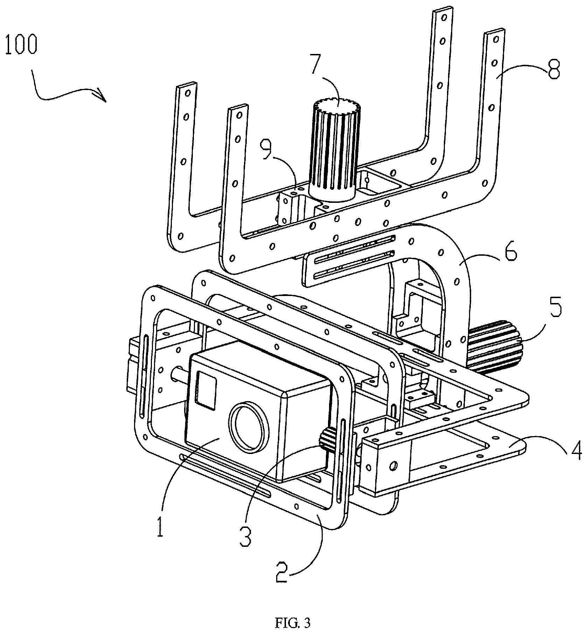

Likewise, in order to prevent the whole assembly rotating about the Z axis from generating the rotational torque, the center of gravity of the first bracket 2, the second bracket 4, the third bracket 6 and the shooting assembly 1 as a whole falls on the rotation axis Z of the third bracket 6, as shown in Fig.2 and Fig.3.

Preferably, the first motor 3, the second motor 5, the third motor 7 and the fourth motor are each a DC brushless motor. Advantages of using DC brushless motors in the platform 100 for use in an unmanned aerial vehicle lie in that: (1) electronic commutation, in place of conventional mechanical commutation, achieves reliable performance, permanent wear resistance, low malfunction rate and an increased service life about six times longer than a brush motor; (2) the DC brushless motor is a static motor with a small no-load current; (3) high efficiency; (4) small size.

Furthermore, the transmission assembly further comprises an inertia sensor, a microprocessor and a signal line, wherein the inertia sensor comprises a gyroscope for detecting an angular speed signal and an accelerometer for detecting an acceleration signal, the microprocessor controls start, stop and the magnitude of rotation speed of the first motor 3 and the second motor 5 according to the angular speed signal and the acceleration signal. The postures of the unmanned aerial vehicle are monitored timely and dynamically by providing the inertia sensor, and the start and stop of the motors are quickly and timely controlled so as to improve the shooting stability of the shooting assembly.

Preferably, on the basis of the above technical solution, structural improvement is made on the basis of the tri-axis platform 100 for use in an unmanned aerial vehicle to add a self-rotation function of the lens of the shooting assembly 1. It should be noted here that the shooting assembly 1 is not limited to the shape as shown in Fig.2 or Fig.3, and the shooting assembly 1 may also be in a shape of a revolving body or other shapes. During the flight of the small unmanned aerial vehicle, when the lens of the shooting assembly 1 rotates to a position perpendicular to a plane constituted by the X axis and Y axis, leftward or rightward rotation of the second bracket 4 about the Y axis can only drive the lens of the shooting assembly 1 to sweep within a certain range of the perpendicular plane and cannot achieve self-rotation of the lens of the shooting assembly 1. In order to allow for omni-directional adjustment of the angle of the lens when the lens rotates to be perpendicular to the plane constituted by the X axis and Y axis, the transmission assembly further comprises a fourth motor which directly drives the shooting assembly 1 to rotate about its own rotation axis K. When the K axis is parallel to or coaxial with the Y axis, the rotation of the second bracket 4 about the Y axis can achieve self-rotation of the lens of the shooting assembly 1; when the K axis is perpendicular to the Y axis, the lens of the shooting assembly 1 achieves self-rotation via the fourth motor.

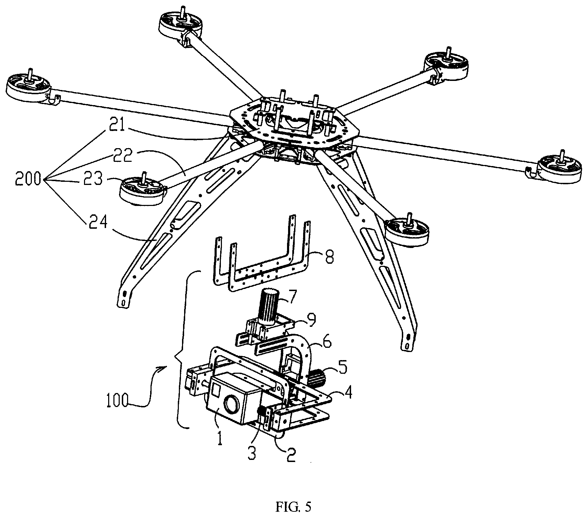

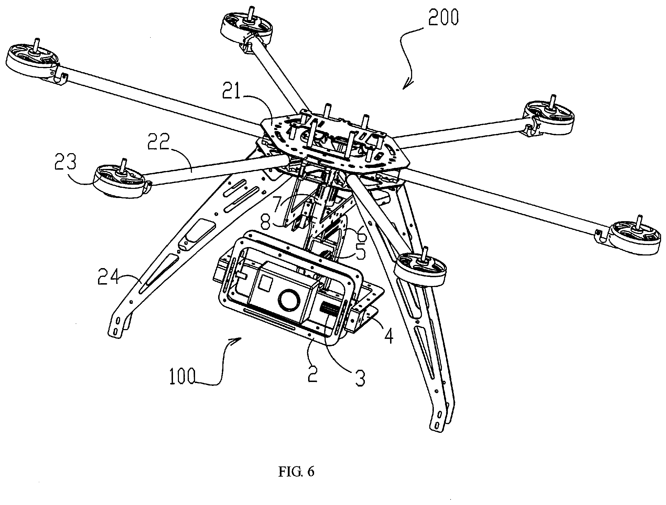

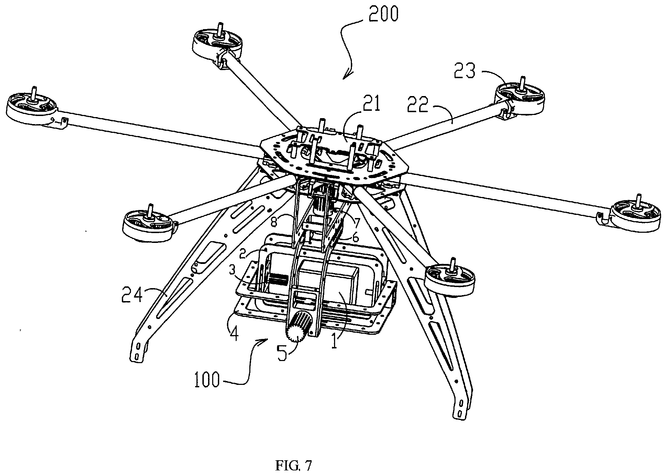

It should be noted here that, the dual-axis platform for use in a small unmanned aerial vehicle and the tri-axis platform 100 for use in a small unmanned aerial vehicle provided in example 1 and example 2 are included in a multi-rotor aerial vehicle according to an embodiment of the present invention. The multi-rotor aerial vehicle may, for example, be an aerial vehicle with four blades, six blades or eight blades. Figs.5, 6 and 7 are structure diagrams of the tri-axis platform 100 for use in a small unmanned aerial vehicle being mounted to a multi-rotor aerial vehicle according to an embodiment of the present invention. The multi-rotor aerial vehicle comprises a multi-rotor mounting frame 200, an inertia measurement module, GPS and other elements. The multi-rotor mounting frame 200 comprises a base 21, a plurality of support arms 22 fixedly arranged and evenly distributed on the base 21, and rotor members 23 disposed on the support arms 22. The connecting frame 8 of the tri-axis platform 100 for use in a small unmanned aerial vehicle is fixed on the base 21 by screwing, riveting or welding, the positioning block 9 is fixed on the connecting frame 8 via a screw, and the stator of the third motor 7 is fixed on the positioning block 9. It is understood that the stator and rotor are interchangeable in position, which can also achieve the purpose of rotation.

Examples and embodiments of the present invention have been described above with reference to figures. However, the present invention is not limited to the above specific embodiments. The above specific embodiments are only illustrative rather than limiting. In the light of the present invention, those having ordinary skill in the art, without departure from the scope defined by the appended claims, may devise many forms, which all fall within the scope of the present invention.

## Claims

1. A multi-rotor small unmanned aerial vehicle, comprising:
a tri-axis platform, comprising:
a dual-axis platform, comprising a machine frame assembly and a transmission assembly, the machine frame assembly comprises a first bracket (2), a second bracket (4) and a third bracket (6), wherein the first bracket (2) is configured to fix a shooting assembly (1), the first bracket (2) is rotatably arranged with the second bracket (4), and the second bracket (4) is rotatably arranged with the third bracket (6),
the transmission assembly comprises a first motor (3) and a second motor (5),
wherein the first motor (3) is configured to directly drive the first bracket (2) to rotate relative to the second bracket (4), and the second motor (5) is configured to directly drive the second bracket (4) to rotate relative to the third bracket (6),
wherein the transmission assembly further comprises a third motor (7), the machine frame assembly further comprises a connecting frame (8) for fixing externally, and the third motor (7) is configured to directly drive the third bracket (6) to rotate relative to the connecting frame (8);
and **characterized in** comprising
a multi-rotor mounting frame (200), the multi-rotor mounting frame comprising:
a support frame (24);
a base (21) on which the connecting frame (8) is fixed;
a plurality of support arms (22) fixedly arranged on the base (21); and
rotor members (23) disposed on the support arms (22).

2. The multi-rotor aerial vehicle according to claim 1, **characterized in that**, a rotation axis X of the first bracket (2) is arranged perpendicular to a rotation axis Yof the second bracket (4).

3. The multi-rotor aerial vehicle according to claim 1, **characterized in that**, a stator of the first motor (3) is fixed on the first bracket (2), and a rotor of the first motor (3) is fixedly arranged with the second bracket (4);
or, the rotor of the first motor (3) is fixed on the first bracket (2) and the stator of the first motor (3) is fixedly arranged with the second bracket (4).

4. The multi-rotor aerial vehicle according to claim 1, **characterized in that**, a stator of the second motor (5) is fixed on the third bracket (6), and a rotor of the second motor (5) is fixedly arranged with the second bracket (4);
or, the rotor of the second motor (5) is fixed on the third bracket (6) and the stator of the second motor (5) is fixedly arranged with the second bracket (4).

5. The multi-rotor aerial vehicle according to claim 1, **characterized in that**, the platform comprises the shooting assembly (1) and the center of gravity of the first bracket (2) and the shooting assembly (1) falls on the rotation axis X of the first bracket(2).

6. The multi-rotor aerial vehicle according to claim 1, **characterized in that**, the platform comprises the shooting assembly (1) and the center of gravity of the first bracket (2), the second bracket (4) and the shooting assembly (1) as a whole falls on the rotation axis Y of the second bracket (4).

7. The multi-rotor aerial vehicle according to any one of the preceding claims, **characterized in that**, the transmission assembly further comprises an inertia sensor, a microprocessor and a signal line, wherein the inertia sensor comprises a gyroscope for detecting an angular speed signal and an accelerometer for detecting an acceleration signal, the microprocessor is configured to control start, stop and the magnitude of rotation speed of the first motor (3) and the second motor (5) according to the angular speed signal and the acceleration signal.

8. The multi-rotor aerial vehicle according to claim 1, **characterized in that**, a stator of the third motor (7) is fixed on the connecting frame (8), and a rotor of the third motor (7) is fixedly connected to the third bracket (6);
or, the rotor of the third motor (7) is fixed on the connecting frame (8) and the stator of the third motor (7) is fixedly connected to the third bracket (6).

9. The tri-axis platform according to claim 8, **characterized in that**, the platform comprises the shooting assembly (1) and the center of gravity of the first bracket (2), the second bracket (4), the third bracket (6) and the shooting assembly (1) as a whole falls on a rotation axis Z of the third bracket (6).

10. The multi-rotor aerial vehicle according to claim 9, **characterized in that**, the platform comprises the shooting assembly (1) and the transmission assembly comprises a fourth motor which is configured to drive the shooting assembly (1) to rotate about its own rotation axis.

11. The multi-rotor aerial vehicle according to claim 10, **characterized in that**, the first motor (3), the second motor (5), the third motor (7) and the fourth motor are each a DC brushless motor.

12. The multi-rotor aerial vehicle according to any one of claims 1 to 11, **characterized in that**, the connecting frame (8) is fixable externally to the unmanned aerial vehicle, and the third bracket (6) is circumferentially rotatable relative to the connecting frame (8), thereby bringing the platform as a whole into circumferential rotation.

13. The multi-rotor aerial vehicle according to claim 11, **characterized in that**, a stator of the third motor (7) is fixed on the connecting frame (8) and a rotor of the third motor (7) is fixedly connected to the third bracket (6).

## Patentansprüche

1. Kleines unbemanntes Luftfahrzeug mit mehreren Rotoren, das Folgendes umfasst:
eine Dreiachsenplattform, die Folgendes umfasst:
eine Zweiachsenplattform, die eine Maschinenrahmenanordnung und eine Übertragungsanordnung umfasst, wobei die Maschinenrahmenanordnung eine erste Halterung (2), eine zweite Halterung (4) und eine dritte Halterung (6) umfasst,
wobei die erste Halterung (2) dazu ausgelegt ist, eine Aufnahmeanordnung (1) zu befestigen, wobei die erste Halterung (2) drehbar an der zweiten Halterung (4) angeordnet ist und die zweite Halterung (4) drehbar an der dritten Halterung (6) angeordnet ist,
die Übertragungsanordnung umfasst einen ersten Motor (3) und
einen zweiten Motor (5), wobei der erste Motor (3) dazu ausgelegt ist, die erste Halterung (2) zum Drehen relativ zur zweiten Halterung (4) direkt anzutreiben, und der zweite Motor (5) dazu ausgelegt ist, die zweite Halterung (4) zum Drehen relativ zur dritten Halterung (6) direkt anzutreiben,
wobei die Übertragungsanordnung ferner einen dritten Motor (7) umfasst, die Maschinenrahmenanordnung ferner einen Verbindungsrahmen (8) zum externen Befestigen umfasst und der dritte Motor (7) dazu ausgelegt ist, die dritte Halterung (6) zum Drehen relativ zum Verbindungsrahmen (8) direkt anzutreiben;
und **dadurch gekennzeichnet, dass** es Folgendes umfasst einen Montagerahmen (200) für mehrere Rotoren, wobei der Montagerahmen für mehrere Rotoren Folgendes umfasst:
einen Stützrahmen (24);
eine Basis (21), auf der der Verbindungsrahmen (8) befestigt ist;
eine Vielzahl von Stützarmen (22), die fest auf der Basis (21) angeordnet sind; und Rotorelemente (23), die auf den Stützarmen (22) positioniert sind.

2. Luftfahrzeug mit mehreren Rotoren nach Anspruch 1, **dadurch gekennzeichnet, dass** eine Drehachse X der ersten Halterung (2) senkrecht zu einer Drehachse Y der zweiten Halterung (4) angeordnet ist.

3. Luftfahrzeug mit mehreren Rotoren nach Anspruch 1, **dadurch gekennzeichnet, dass** ein Stator des ersten Motors (3) an der ersten Halterung (2) befestigt ist und ein Rotor des ersten Motors (3) fest an der zweiten Halterung (4) angeordnet ist; oder der Rotor des ersten Motors (3) an der ersten Halterung (2) befestigt ist und der Stator des ersten Motors (3) fest an der zweiten Halterung (4) angeordnet ist.

4. Luftfahrzeug mit mehreren Rotoren nach Anspruch 1, **dadurch gekennzeichnet, dass** ein Stator des zweiten Motors (5) an der dritten Halterung (6) befestigt ist und ein Rotor des zweiten Motors (5) fest an der zweiten Halterung (4) angeordnet ist;
oder der Rotor des zweiten Motors (5) an der dritten Halterung (6) befestigt ist und der Stator des zweiten Motors (5) fest an der zweiten Halterung (4) angeordnet ist.

5. Luftfahrzeug mit mehreren Rotoren nach Anspruch 1, **dadurch gekennzeichnet, dass** die Plattform die Aufnahmeanordnung (1) umfasst und der Schwerpunkt der ersten Halterung (2) und der Aufnahmeanordnung (1) auf der Drehachse X der ersten Halterung (2) liegt.

6. Luftfahrzeug mit mehreren Rotoren nach Anspruch 1, **dadurch gekennzeichnet, dass** die Plattform die Aufnahmeanordnung (1) umfasst und der Schwerpunkt der ersten Halterung (2), der zweiten Halterung (4) und der Aufnahmeanordnung (1) als Ganzes auf der Drehachse Y der zweiten Halterung (4) liegt.

7. Luftfahrzeug mit mehreren Rotoren nach einem der vorhergehenden Ansprüche, **dadurch gekennzeichnet, dass** die Übertragungsanordnung ferner einen Trägheitssensor, einen Mikroprozessor und eine Signalleitung umfasst, wobei der Trägheitssensor ein Gyroskop zum Detektieren eines Winkelgeschwindigkeitssignals und einen Beschleunigungsmesser zum Detektieren eines Beschleunigungssignals umfasst, wobei der Mikroprozessor dazu ausgelegt ist, das Starten, das Stoppen und die Größe einer Drehgeschwindigkeit des ersten Motors (3) und des zweiten Motors (5) gemäß dem Winkelgeschwindigkeitssignal und dem Beschleunigungssignal zu steuern.

8. Luftfahrzeug mit mehreren Rotoren nach Anspruch 1, **dadurch gekennzeichnet, dass** ein Stator des dritten Motors (7) am Verbindungsrahmen (8) befestigt ist und ein Rotor des dritten Motors (7) fest mit der dritten Halterung (6) verbunden ist;
oder der Rotor des dritten Motors (7) am Verbindungsrahmen (8) befestigt ist und der Stator des dritten Motors (7) fest mit der dritten Halterung (6) verbunden ist.

9. Dreiachsenplattform nach Anspruch 8, **dadurch gekennzeichnet, dass** die Plattform die Aufnahmeanordnung (1) umfasst und der Schwerpunkt der ersten Halterung (2), der zweiten Halterung (4), der dritten Halterung (6) und der Aufnahmeanordnung (1) als Ganzes auf einer Drehachse Z der dritten Halterung (6) liegt.

10. Luftfahrzeug mit mehreren Rotoren nach Anspruch 9, **dadurch gekennzeichnet, dass** die Plattform die Aufnahmeanordnung (1) umfasst und die Übertragungsanordnung einen vierten Motor umfasst, der dazu ausgelegt ist, die Aufnahmeanordnung (1) um ihre eigene Drehachse zu drehen.

11. Luftfahrzeug mit mehreren Rotoren nach Anspruch 10, **dadurch gekennzeichnet, dass** der erste Motor (3), der zweite Motor (5), der dritte Motor (7) und der vierte Motor jeweils ein bürstenloser DC-Motor sind.

12. Luftfahrzeug mit mehreren Rotoren nach einem der Ansprüche 1 bis 11, **dadurch gekennzeichnet, dass** der Verbindungsrahmen (8) außerhalb des unbemannten Luftfahrzeugs befestigbar ist und die dritte Halterung (6) relativ zum Verbindungsrahmen (8) umfänglich drehbar ist, wodurch die Plattform als Ganzes in eine umfängliche Drehung versetzt wird.

13. Luftfahrzeug mit mehreren Rotoren nach Anspruch 11, **dadurch gekennzeichnet, dass** ein Stator des dritten Motors (7) am Verbindungsrahmen (8) befestigt ist und ein Rotor des dritten Motors (7) fest mit der dritten Halterung (6) verbunden ist.

## Revendications

1. Petit véhicule aérien sans pilote à plusieurs rotors comprenant :
une plateforme à trois axes comprenant :
une plateforme à deux axes comprenant un ensemble de bâti de machine et un ensemble de transmission, l'ensemble de bâti de machine comprend un premier support (2), un deuxième support (4) et un troisième support (6), dans lequel le premier support (2) est configuré pour fixer un ensemble de tir (1), le premier support (2) est agencé, en rotation, avec le deuxième support (4) et le deuxième support (4) est agencé, en rotation, avec le troisième support (6),
l'ensemble de transmission comprend un premier moteur (3) et un deuxième moteur (5),
dans lequel le premier moteur (3) est configuré pour entraîner directement le premier support (2) à tourner par rapport au deuxième support (4), et le deuxième moteur (5) est configuré pour entraîner directement le deuxième support (4) afin qu'il tourne par rapport au troisième support (6),
dans lequel l'ensemble de transmission comprend en outre un troisième moteur (7), l'ensemble de bâti de machine comprend en outre un bâti de raccordement (8) pour la fixation externe, et le troisième moteur (7) est configuré pour entraîner directement le troisième support (6) à tourner par rapport au bâti de raccordement (8) ;
et **caractérisé en ce qu'**il comprend :
un bâti de montage à plusieurs rotors (200), le bâti de montage à plusieurs rotors comprenant :
un bâti de support (24) ;
une base (21) sur laquelle le bâti de raccordement (8) est fixé ;
une pluralité de bras de support (22) agencés, de manière fixe, sur la base (21) ; et
des éléments de rotor (23) disposés sur les bras de support (22).

2. Véhicule aérien à plusieurs rotors selon la revendication 1, **caractérisé en ce qu'**un axe de rotation X du premier support (2) est agencé perpendiculairement à un axe de rotation Y du deuxième support (4).

3. Véhicule aérien à plusieurs rotors selon la revendication 1, **caractérisé en ce qu'**un stator du premier moteur (3) est fixé sur le premier support (2), et un rotor du premier moteur (3) est agencé, de manière fixe, avec le deuxième support (4) ;
ou bien le rotor du premier moteur (3) est fixé sur le premier support (2) et le stator du premier moteur (3) est agencé, de manière fixe, avec le deuxième support (4).

4. Véhicule aérien à plusieurs rotors selon la revendication 1, **caractérisé en ce qu'**un stator du deuxième moteur (5) est fixé sur le troisième support (6), et un rotor du deuxième moteur (5) est agencé, de manière fixe, avec le deuxième support (4) ;
ou bien le rotor du deuxième moteur (5) est fixé sur le troisième support (6) et le stator du deuxième moteur (5) est agencé, de manière fixe, avec le deuxième support (4).

5. Véhicule aérien à plusieurs rotors selon la revendication 1, **caractérisé en ce que** la plateforme comprend l'ensemble de tir (1) et le centre de gravité du premier support (2) et de l'ensemble de tir (1) tombe sur l'axe de rotation X du premier support (2).

6. Véhicule aérien à plusieurs rotors selon la revendication 1, **caractérisé en ce que** la plateforme comprend l'ensemble de tir (1) et le centre de gravité du premier support (2), du deuxième support (4) et de l'ensemble de tir (1) dans son ensemble, tombe sur l'axe de rotation Y du deuxième support (4).

7. Véhicule aérien à plusieurs rotors selon l'une quelconque des revendications précédentes, **caractérisé en ce que** l'ensemble de transmission comprend en outre un capteur d'inertie, un microprocesseur et une ligne de signal, dans lequel le capteur d'inertie comprend un gyroscope pour détecter un signal de vitesse angulaire et un accéléromètre pour détecter un signal d'accélération, le microprocesseur est configuré pour commander le démarrage, l'arrêt et la grandeur de la vitesse de rotation du premier moteur (3) et du deuxième moteur (5) selon le signal de vitesse angulaire et le signal d'accélération.

8. Véhicule aérien à plusieurs rotors selon la revendication 1, **caractérisé en ce qu'**un stator du troisième moteur (7) est fixé sur le bâti de raccordement (8), et un rotor du troisième moteur (7) est raccordé, de manière fixe, au troisième support (6) ;
ou bien le rotor du troisième moteur (7) est fixé sur le bâti de raccordement (8) et le stator du troisième moteur (7) est raccordé au troisième support (6).

9. Plateforme à trois axes selon la revendication 8, **caractérisé en ce que** la plateforme comprend l'ensemble de tir (1) et le centre de gravité du premier support (2), du deuxième support (4), du troisième support (6) et de l'ensemble de tir (1) dans son ensemble, tombe sur un axe de rotation Z du troisième support (6).

10. Véhicule aérien à plusieurs rotors selon la revendication 9, **caractérisé en ce que** la plateforme comprend l'ensemble de tir (1) et l'ensemble de transmission comprend un quatrième moteur qui est configuré pour entraîner l'ensemble de tir (1) pour tourner autour de son propre axe de rotation.

11. Véhicule aérien à plusieurs rotors selon la revendication 10, **caractérisé en ce que** le premier moteur (3), le deuxième moteur (5), le troisième moteur (7) et le quatrième moteur sont chacun un moteur sans-balai à courant continu.

12. Véhicule aérien à plusieurs rotors selon l'une quelconque des revendications 1 à 11, **caractérisé en ce que** le bâti de raccordement (8) peut être fixé, de manière externe, sur le véhicule aérien sans pilote, et le troisième support (6) est entraîné circonférentiellement en rotation par rapport au bâti de raccordement (8), amenant ainsi la plateforme dans son ensemble en rotation circonférentielle.

13. Véhicule aérien à plusieurs rotors selon la revendication 11, **caractérisé en ce qu'**un stator du troisième moteur (7) est fixé sur le bâti de raccordement (8) et un rotor du troisième moteur (7) est raccordé, de manière fixe, au troisième support (6).
